# EUROPÄISCHE PATENTSCHRIFT

(11) **EP 1 751 381 B1**
(45) Veröffentlichungstag und Bekanntmachung des Hinweises auf die Patenterteilung: **16.12.2009**
(21) Anmeldenummer: 05740290.1
(22) Anmeldetag: 04.05.2005
(51) Int. Cl.: E05B 65/20, E05B 7/00

(54) **KRAFTFAHRZEUGTÜRGRIFF**
MOTOR VEHICLE DOOR HANDLE
POIGNEE DE PORTE DE VEHICULE AUTOMOBILE

(30) Priorität: 06.08.2004 DE 102004038569
(43) Veröffentlichungstag der Anmeldung: 14.02.2007
(73) Patentinhaber: Huf Hülsbeck & Fürst GmbH & Co. KG, 42551 Velbert (DE)
(72) Erfinder: SCHNIDLER, Mirko, 42549 Velbert (DE); SCHUMACHER, Helmut, 48653 Coesfeld (DE); KLEIN, Helmut, 42549 Velbert (DE)
(74) Vertreter: Schmidt, Frank-Michael
(86) Internationale Anmeldenummer: PCT/EP2005/004869
(87) Internationale Veröffentlichungsnummer: WO 2006/015631

(56) Entgegenhaltungen:
- EP-A- 1 035 276
- WO-A-2004/007876
- DE-A1- 10 213 681
- US-A1- 2003 031 025

## Beschreibung

Die Erfindung betrifft einen Kraftfahrzeugtürgriff mit einem Greifbereich und einer im Inneren des Greifbereichs angeordneten Elektronikbaugruppe sowie ein Verfahren zum Herstellen eines solchen Kraftfahrzeugtürgriffs.

Aus der DE 102 42 038 A1 ist eine Türgriffanordnung für eine Kraftfahrzeugtür bekannt, zu deren Herstellung zunächst ein Kunststoff-Grundkörper mit einem Hohlraum bereitgestellt wird, wobei sich der Hohlraum über die gesamte Grifflänge insbesondere in dessen Greifbereich erstreckt und eine an einer Stirnseite des Griffs angeordnete erste Öffnung sowie eine an bzw. hinter der Türwandung liegende zweite Öffnung aufweist. Eine langgestreckte flexible Leiterplattenanordnung nimmt elektronische Baugruppen (beispielsweise eine Ferritstabantenne und Steuerschaltungen) auf und weist an einem Ende einen "Folienschwanz" mit Zuleitungen für die Elektronikbaugruppen auf. Beginnend mit dem Folienschwanz wird die langgestreckte bestückte Leiterplattenanordnung durch die stirnseitige Öffnung hindurch in den Hohlraum des Griffkörpers eingeschoben, bis das Ende der Zuleitungen aus der gegenüberliegend an der Türwandung angeordneten Öffnung des Griffhohlraums austritt. Die Öffnung, durch welche die Elektronikbaugruppe eingeschoben wird, wird anschließend durch eine Endkappe verschlossen, wobei die Endkappe gleichzeitig an der Elektronikbaugruppe befestigt ist und diese trägt. Bei bzw. nach Einschieben der langgestreckten Leiterplatte in den Hohlraum kann dieser mit einer Vergußmasse gefüllt werden. Anschließend wird die Vergußmasse zum Aushärten gebracht.

Neben diesem Stand der Technik sind alternative Anordnungen bekannt, bei denen eine Griffschale eine sich im wesentlichen über die gesamte Länge der Griffschale erstreckende seitliche Öffnung aufweist und bei denen die Elektronikbaugruppe durch die seitliche Öffnung eingelegt und anschließend vergossen wird.

Um eine exakte Positionierung bestimmter Elektronikbaugruppen innerhalb des Türgriffs zu erreichen, sind bei den genannten Ausführungsformen die mit dem Hohlraum versehenen Grundkörper sowohl bezüglich ihrer Außen- als auch ihrer Innenkonturen exakt herzustellen. Das Eingießen der Elektronikbaugruppe ist ein relativ aufwendiger Vorgang.

Aus der DE 102 12 794 A1 ist eine Türgriffanordnung bekannt, bei der zunächst eine Elektronikbaugruppe mit einem Mantel aus weichem Kunststoff umgossen wird. Anschließend wird die so hergestellte eingegossene Elektronikbaugruppe in eine Spritzgußform eingebracht und teilweise oder vollständig mit einem harten Kunststoff umspritzt. Der zum Umspritzen verwendete Kunststoff ist dabei so zu wählen, daß er den Anforderungen an die Oberfläche (Aussehen, Oberflächenrauhigkeit, Festigkeit) des Kraftfahrzeugtürgriffs genügt. Gleichzeitig nimmt dieser Kunststoff den größten Teil des Volumens des Kraftfahrzeugtürgriffs ein und bestimmt somit auch die Volumeneigenschaften (beispielsweise die Gesamtmasse) wesentlich mit.

Die EP 1 035 276 A2 beschreibt einen Fahrzeuggriff mit einem Kern und einer in dem Kern ausgebildeten Aufnahme, in welcher eine Antenne angeordnet ist. Der Kern ist mit einer Schicht aus einem thermoplastischen Material umgeben, wobei die Antenne zum Schutz vor dem thermoplastischen Material mit einem Deckel versehen ist. Die Druckschrift beschreibt ferner ein Verfahren zum Herstellen des Fahrzeuggriffs, wobei zunächst der Kern mit der Aufnahme gebildet wird und dann die Antenne in die Aufnahme eingelegt wird. Anschließend wird die Antenne mit einem Deckel abgedeckt und der Kern mit dem thermoplastischen Material umgossen. Aus der US 2003/0031025 A1 ist es bekannt, einen Kern eines Fahrzeuggriffes gemäß dem MuCell-Verfahren herzustellen.

Aufgabe der Erfindung ist es, einen Kraftfahrzeugtürgriff bzw. ein Verfahren zu dessen Herstellung zu schaffen, bei dem eine in dem Kern des Kraftfahrzeugtürgriffes angeordnete elektronische Baugruppe gegenüber einer äußeren Schicht des Kraftfahrzeugtürgriffes geschützt ist.

Diese Aufgabe wird erfindungsgemäß durch einen Kraftfahrzeugtürgriff mit den Merkmalen des Patentanspruchs 1 bzw. ein Verfahren zu dessen Herstellung mit den Merkmalen des Patentanspruchs 10 gelöst.

Der erfindungsgemäße Kraftfahrzeugtürgriff weist einen sich im Inneren des Türgriffs erstreckenden Kunststoff-Spritzguß-Trägerkern auf, wobei eine Elektronikbaugruppe in einer in einem Greifbereich angeordneten Ausnehmung des Trägerkerns angeordnet ist. Die Elektronikbaugruppe ist auf einem Kunststoffträger vormontiert und so in der Ausnehmung eingebracht, daß der Kunststoffträger eine Abdeckung der Ausnehmung bildet. Der Trägerkern mit der darin angeordneten Elektronikbaugruppe ist mit einer eine Außenwandung des Kraftfahrzeugtürgriffs bildenden Deckschicht aus Kunststoff umspritzt, wobei der Kunststoffträger der Elektronikbaugruppe einen wirksamen Schutz vor der Deckschicht aus Kunststoff bildet. Der die Oberflächeneigenschaften des Kraftfahrzeugtürgriffs bestimmende Kunststoff wird lediglich in der Abdeckschicht verwendet, d.h., er nimmt nur einen relativ kleinen Teil des Gesamtvolumens des Kraftfahrzeugtürgriffs ein. Ein großer Teil des Volumens des Kraftfahrzeugtürgriffs wird von dem im Inneren angeordneten Trägerkern eingenommen, der ebenfalls im Spritzguß aus einem Kunststoff hergestellt ist. Der Werkstoff des Trägerkerns kann dabei unabhängig von den gewünschten Oberflächeneigenschaften des Türgriffs so gewählt werden, daß die gewünschten Volumeneigenschaften des Türgriffs erreicht werden. Vorzugsweise wird der Werkstoff des Kunststoff-Spritzguß-Trägerkerns so gewählt, daß er eine geringe Masse (bzw. geringe Dichte) aufweist.

Bei dem erfindungsgemäßen Verfahren zum Herstellen eines Kraftfahrzeugtürgriffs mit einem Greifbereich und einem Inneren des Kraftfahrzeugtürgriffs im Greifbereich angeordneten Elektronikbaugruppe wird zunächst ein Kunststoff-Trägerkern in einem Spritzgußverfahren hergestellt, der einen Trägerkern-Griffabschnitt aufweist, wobei in dem Trägerkern-Griffabschnitt eine Ausnehmung ausgebildet wird. Anschließend wird die Elektronikbaugruppe in die Ausnehmung eingebracht. Die Elektronikbaugruppe ist auf einer Kunststoffplatte vormontiert und wird derart in die Ausnehmung eingebracht, daß die Kunststoffplatte die Ausnehmung mit der Elektronikbaugruppe abdeckt. Schließlich wird der Trägerkern mit einer Abdeckschicht aus Kunststoff umspritzt, so daß die Abdeckschicht die Außenwandung des Kraftfahrzeugtürgriffs und der umspritzte Trägerkern-Griffabschnitt den Greifbereich des Kraftfahrzeugtürgriffs bildet, wobei die oben genannte spezielle Anordnung der Elektronikbaugruppe in der Ausnehmung für einen Schutz der elektronischen Bauteile gegenüber der Abdeckschicht sorgt.

Bei einer bevorzugten Ausführungsform wird der Trägerkern in einem Spritzgießverfahren hergestellt, bei dem ein Spritzgußteil mit einer Schaumstruktur gebildet wird. Vorzugsweise wird der Trägerkern in einem MuCell-Verfahren hergestellt. Da dieser Trägerkern den größten Teil des Volumens des Kraftfahrzeugtürgriffs einnimmt, läßt sich so die Gesamtmasse des Türgriffs senken. In bevorzugter Weiterbildung ist vorgesehen, daß die Abdeckschicht an keiner Stelle dicker als 15 mm ist, vorzugsweise weniger als 5 mm dick ist. Die Minimierung der Schichtdicke der Abdeckschicht dient u.a. der weiteren Verringerung des Gewichts.

Bei einer bevorzugten Weiterbildung des erfindungsgemäßen Kraftfahrzeugtürgriffs sind Anschlußzuleitungen der Elektronikbaugruppe ausgehend von der Ausnehmung des Trägerkerns durch einen an einer Türwandung ansetzenden Bereich des Trägerkern im Inneren des Trägerkerns geführt und treten an einer Stelle aus dem Kraftfahrzeugtürgriff aus, die im montierten Zustand hinter der Türwandung angeordnet ist. Hierbei können die Anschlußzuleitungen einerseits bereits vor Einbringung der Elektronikbaugruppe in die Ausnehmung im Innern des Trägerkerns vorhanden sein, wobei die im Trägerkern vorhandenen Zuleitungen mit in der Ausnehmung angeordneten Kontakten verbunden sind, wobei entsprechende Kontakte der Elektronikbaugruppe in diese Kontakte eingreifen. Andererseits kann der Trägerkern einen Kanal (beispielsweise eine Bohrung) aufweisen, durch den die Anschlußzuleitungen beim Einlegen der Elektronikbaugruppe in die Ausnehmung hindurchgeführt werden. Bei dieser Ausführungsform werden die Anschlußzuleitungen vorab mit der Elektronikbaugruppe verbunden.

Die Elektronikbaugruppe kann einteilig oder mehrteilig sein und in eine oder mehrere Teilausnehmungen eingelegt sein. Beispielsweise kann die Elektronikbaugruppe eine Antennenbaugruppe und eine Sensorbaugruppe umfassen, die in zugehörige Ausnehmungen eingelegt und mit Zuleitungen verbunden sind.

Es ist auch denkbar, daß die Elektronikbaugruppe beim Einbringen in die Ausnehmung eingeklebt oder eingegossen wird.

Vorteilhafte und/oder bevorzugte Ausführungsformen der Erfindung sind in den Unteransprüchen gekennzeichnet.

Im folgenden wird die Erfindung anhand eines in den Zeichnungen dargestellten Ausführungsbeispiels näher erläutert. In der Zeichnung zeigen:
Fig. 1 eine schematische Längsschnittansicht einer Ausführungsform des erfindungsgemäßen Kraftfahrzeugtürgriffs; und
Fig. 2 eine schematische Längsschnittansicht eines Kraftfahrzeugtürgriffs.

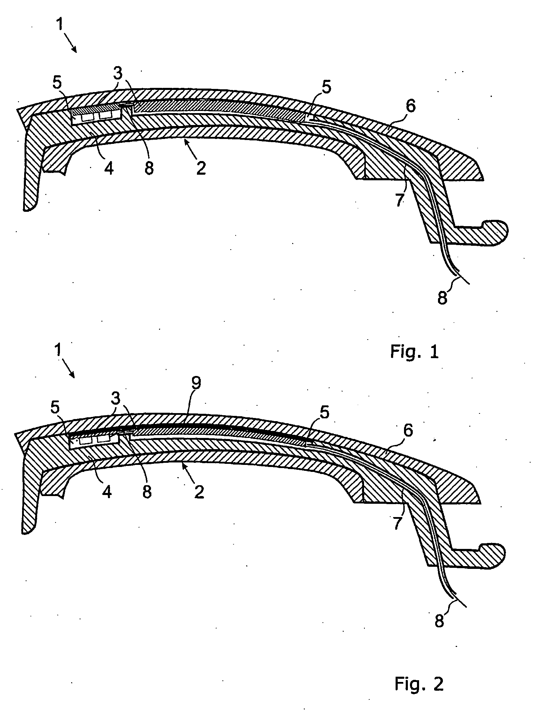

Der in Fig. 1 dargestellte Kraftfahrzeugtürgriff 1 besteht aus einem mit einer Abdeckschicht 6 umspritzten Kunststoff-Spritzguß-Trägerkern 4. Der Trägerkern 4 nimmt dabei den größten Teil des Volumens des Kraftfahrzeugtürgriffs 1 ein. Der Trägerkern 4 weist eine oder mehrere Ausnehmungen 5 auf, in die Elektronikbaugruppen 3 eingebracht sind. Die Anschlußleitungen 8 der Elektronikbaugruppen 3 sind durch einen im Inneren des Trägerkerns 4 enthaltenen Kanal 7 an einer Stelle nach außen geführt, die sich im montierten Zustand hinter einer Türwandung befindet, an der der Türgriff 1 montiert ist. Die Ausnehmungen 5 mit den Elektronikbaugruppen 3 sind in einem Greifbereich 2 des Türgriffs 1 angeordnet. Die Elektronikbaugruppen 3 umfassen vorzugsweise eine Sensoranordnung zum Erfassen der Annäherung der Hand eines Bedieners an den Greifbereich 2, eine eine Induktionsspule umfassende Sendeantennenanordnung zum Abstrahlen eines langwelligen Aufwecksignals für eine ID-Geber eines schlüssellosen Kraftfahrzeugzugangssystems sowie verschiedene Ansteuerschaltungen. Die Abmessungen der Elektronikbaugruppen 3 sind so auf die Abmessungen der Ausnehmungen 5 abgestimmt, daß die Elektronikbaugruppen die Ausnehmungen an deren Oberseite verschließen oder nur ein relativ geringer Spalt zwischen Elektronikbaugruppe und Wandung der Ausnehmung verbleibt. Beispielsweise sind die Elektronikbaugruppen auf Kunststoffträgern (die beispielsweise Leiterplatten umfassen) vormontiert, wobei die Kunststoffträger eine Abdeckung der Ausnehmung 5 bilden.

Bei dem erfindungsgemäßen Kraftfahrzeugtürgriff nimmt der Trägerkern einen großen Teil des Gesamtvolumens ein, wodurch die Masse des Trägerkerns 4 die Gesamtmasse des Kraftfahrzeugtürgriffs wesentlich mitbestimmt. Um ein möglichst geringes Gewicht des Kraftfahrzeugtürgriffs zu erreichen, weist der Kunststoff-Spritzguß-Trägerkern 4 eine Schaumstruktur auf. Der Trägerkern 4 ist formstabil und enthält gasgefüllte Poren oder Bläschen. Eine solche Schaumstruktur kann durch ein Kunststoffmaterial erreicht werden, das nach dem Einspritzen in eine Form Gasbläschen bildet und dabei oder anschließend aushärtet. Das Gas kann durch chemische Reaktionen gebildet sein. Vorzugsweise jedoch wird der Kunststoff-Spritzguß-Trägerkern 4 durch ein Spritzgießverfahren hergestellt, bei dem ein Gas (vorzugsweise Stickstoff oder Kohlendioxid) direkt in die Schnecke der Spritzgießmaschine eingespritzt wird und in einem überkritischen Zustand vorliegt. Es wird dabei eine homogene Schmelze zur Verfügung gestellt, bevor diese in die Spritzgußform eingespritzt wird. In der Form schäumt der Kunststoff auf, kühlt ab und erhärtet. Ein solches Verfahren wird beispielsweise durch das MuCell-Verfahren realisiert. Dieses Verfahren erbringt eine feinzellige Schaumstruktur bei erheblich reduzierter Dichte.

Zur Herstellung des Kraftfahrzeugtürgriffs 1 wird der im MuCell-Spritzgießverfahren hergestellte Trägerkern 4 zunächst mit der Elektronikbaugruppe 3 und den Zuleitungen 8 versehen und anschließend in eine weitere Spritzgußform eingelegt und dort mit einer Abdeckschicht 6 umspritzt. Der Kunststoff der die Außenwandung des Kraftfahrzeugtürgriffs 1 bildenden Abdeckschicht 6 ist dabei so gewählt, daß sich die gewünschten Oberflächeneigenschaften (Färbung, Oberflächenrauhigkeit) ergeben. Die Dichte des Kunststoffmaterials der Abdeckschicht ist dabei von untergeordneter Bedeutung, da die Abdeckschicht aufgrund ihrer geringen Dicke einen relativ geringen Einfluß auf das Gesamtgewicht des Kraftfahrzeugtürgriffs 1 hat.

Bei der bevorzugten und in Figur 1 dargestellten Ausführungsform sind die Zuleitungen 8 fest mit der Elektronikbaugruppe 3 verbunden und durch einen Kanal 7 des Trägerkerns 4 geführt. Bei einer alternativen Ausführungsform könnten Zuleitungen 8 bereits bei der Herstellung des Trägerkerns 4 in das Material des Trägerkerns während des Spritzgießens eingebettet werden. In diesem Fall könnten die in die Ausnehmung 5 hineinragenden Enden der Zuleitungen 8 mit Kontakten versehen sein, wobei die Kontakte so ausgebildet sind, daß sie mit entsprechenden Kontakten der Elektronikbaugruppe 3 in Eingriff stehen können, wenn die Elektronikbaugruppe 3 in die Ausnehmung 5 eingelegt wird. Die entgegengesetzten Enden der Anschlußleitungen 8 könnten an einem Steckverbinder befestigt sein, der ebenfalls vom Kunststoffmaterial des Trägerkerns umspritzt ist und fest im Trägerkern gehalten wird.

## Patentansprüche

1. Kraftfahrzeugtürgriff (1) mit einem Greifbereich (2) und einer im Inneren des Greifbereichs (2) angeordneten Elektronikbaugruppe (3), wobei:
sich im Inneren des Kraftfahrzeugtürgriffs (1) ein Kunststoff-Spritzguß-Trägerkern (4) erstreckt,
die Elektronikbaugruppe (3) in einer Ausnehmung (5) des Trägerkerns (4) angeordnet ist, **dadurch gekennzeichnet, dass** die Elektronikbaugruppe auf einem Kunststoffträger vormontiert und so in die Ausnehmung (5) eingebracht ist, daß der Kunststoffträger eine Abdeckung der Ausnehmung (5) bildet, und
der Trägerkern (4) zusammen mit der Elektronikbaugruppe (3) mit einer eine Außenwandung des Kraftfahrzeugtürgriffs (1) bildenden Abdeckschicht (6) aus Kunststoff umspritzt ist.

2. Kraftfahrzeugtürgriff nach Anspruch 1, **dadurch gekennzeichnet, daß** der Trägerkern (4) ein Spritzgußformteil mit einer Schaumstruktur ist.

3. Kraftfahrzeugtürgriff nach Anspruch 2, **dadurch gekennzeichnet, daß** der Trägerkern (4) ein im MuCell-Verfahren hergestelltes Spritzgußformteil ist.

4. Kraftfahrzeugtürgriff nach einem der Ansprüche 1 bis 3, **dadurch gekennzeichnet, daß** die Abdeckschicht (6) an keiner Stelle dicker als 15 mm ist, vorzugsweise weniger als 5 mm dick ist.

5. Kraftfahrzeugtürgriff nach einem der Ansprüche 1 bis 3, **dadurch gekennzeichnet, daß** Anschlußzuleitungen (8) der Elektronikbaugruppe (3) ausgehend von der Ausnehmung (5) des Trägerkerns (4) durch einen an einer Türwandung ansetzenden Bereich des Trägerkerns im Inneren des Trägerkerns (4) geführt sind und an einer Stelle aus dem Kraftfahrzeugtürgriff austreten, die im montierten Zustand hinter der Türwandung angeordnet ist.

6. Kraftfahrzeugtürgriff nach Anspruch 5, **dadurch gekennzeichnet, daß** die Anschlußzuleitungen Kabel (8) umfassen, die durch einen von der Ausnehmung (5) ausgehenden Kanal (7) geführt sind.

7. Kraftfahrzeugtürgriff nach Anspruch 6, **dadurch gekennzeichnet, daß** die durch den Kanal (7) geführten Kabel fest mit der Elektronikbaugruppe (3) verbunden sind.

8. Kraftfahrzeugtürgriff nach Anspruch 5, **dadurch gekennzeichnet, daß** die Anschlußzuleitungen in den Trägerkern eingebrachte Leitungen umfassen, die mit Kontakten im Inneren der Ausnehmung verbunden sind, wobei die Kontakte im Inneren der Ausnehmung mit entsprechenden Kontakten der Elektronikbaugruppe in Eingriff stehen.

9. Kraftfahrzeugtürgriff nach einem der Ansprüche 1 bis 8, **dadurch gekennzeichnet, daß** die Elektronikbaugruppe (3) mehrere Unterbaugruppen umfaßt, die jeweils in zugehörige Teilausnehmungen des Trägerkerns (4) eingebracht sind.

10. Verfahren zum Herstellen eines Kraftfahrzeugtürgriffs (1) mit einem Greifbereich (2) und einer im Inneren des Kraftfahrzugtürgriffs (1) im Greifbereich (2) angeordneten Elektronikbaugruppe (3) wobei :
a) ein Kunststoff-Trägerkern (4) in einem Spritzgußverfahren hergestellt wird, der einen Trägerkern-Griffabschnitt aufweist, wobei in dem Trägerkern-Griffabschnitt eine Ausnehmung (5) ausgebildet wird,
**dadurch gekennzeichnet dass**
b) die Elektronikbaugruppe (3) in die Ausnehmung (5) eingebracht wird, wobei die Elektronikbaugruppe (3) auf einer Kunststoffplatte vormontiert ist und derart in die Ausnehmung (5) eingebracht wird, daß die Kunststoffplatte die Ausnehmung (5) mit der Elektronikbaugruppe (3) abdeckt, und
c) der Trägerkern (4) mit einer Abdeckschicht (6) aus Kunststoff umspritzt wird, so daß die Abdeckschicht (6) die Außenwandung des Kraftfahrzeugtürgriffs (1) bildet und der umspritzte Trägerkern-Griffabschnitt den Greifbereich (2) des Kraftfahrzeugtürgriffs (1) bildet.

11. Verfahren nach Anspruch 10, **dadurch gekennzeichnet, daß** im Schritt a) der Trägerkern (4) in einem Spritzgießverfahren hergestellt wird, bei dem ein Spritzgußteil mit einer Schaumstruktur gebildet wird.

12. Verfahren nach Anspruch 11, **dadurch gekennzeichnet, daß** der Trägerkern (4) mit einem MuCell-Verfahren hergestellt wird.

13. Verfahren nach einem der Ansprüche 10 bis 12 **dadurch gekennzeichnet, daß** die Ausnehmung (5) bei der Herstellung des Trägerkerns (4) durch Spritzgießen hergestellt wird.

14. Verfahren nach einem der Ansprüche 10 bis 13, **dadurch gekennzeichnet, daß** ein Trägerkern (4) mit einem von der Ausnehmung (5) ausgehenden Zuleitungskanal (7) hergestellt wird und Zuleitungen (8) der Elektronikbaugruppe (5) bei deren Einbringen in die Ausnehmung (5) durch den Zuleitungskanal (7) geführt werden.

## Claims

1. A motor vehicle door handle (1) with a grip region (2) and an electronic assembly (3) arranged in the interior of the grip region 2, wherein: an injection moulded plastic support core (4) extends in the interior of the motor vehicle door handle (1), the electronic assembly (3) is arranged in a recess (5) in the support core (4) **characterised in that** the electronic assembly is pre-mounted on a plastic carrier and is introduced into the recess (5) so that the plastic carrier forms a cover for the recess (5), and a cover layer (6) of plastic material constituting an outer wall of the motor vehicle door handle is injection moulded around the support core (4) together with the electronic assembly (3).

2. A motor vehicle door handle as claimed in claim 1 **characterised in that** the support core (4) is an injection moulded component with a foam structure.

3. A motor vehicle door handle as claimed in claim 2, **characterised in that** the support core (4) is an injection moulded component produced by the MuCell process.

4. A motor vehicle door handle as claimed in one of claims 1 to 3, **characterised in that** the cover layer (6) is at no point thicker than 15mm and is preferably less than 5mm thick.

5. A motor vehicle door handle as claimed in one of claims 1 to 3 **characterised in that** connecting lines (8) of the electronic assembly (7) starting from the recess (5) in the support core (4) extend through the region of the support core starting at a door wall in the interior of the support core (4) and exit from the motor vehicle door handle at a position which is disposed behind the door wall, in the installed state.

6. A motor vehicle door handle as claimed in claim 5, **characterised in that** the connecting lines include cables (8) which extend through a passage (7) starting from the recess (5).

7. A motor vehicle door handle as claimed in claim 6, **characterised in that** the cables extending through the passage (7) are firmly connected to the electronic assembly (3).

8. A motor vehicle door handle as claimed in claim 5, **characterised in that** the connecting lines include lines introduced into the support core, which are connected to contacts in the interior of the recess, whereby the contacts in the interior of the recess are in engagement with corresponding contacts of the electronic assembly.

9. A motor vehicle door handle as claimed in one of claims 1 to 8, **characterised in that** the electronic assembly (3) includes a plurality of subassemblies, which are introduced into respective, associated component recesses in the support core (4).

10. A method of manufacturing a motor vehicle door handle (1) with a grip region (2) and an electronic assembly (3) arranged in the interior of the motor vehicle door handle (1) in the grip region (2), wherein: a) a plastic support core (4) which includes a support core grip section, is produced in an injection moulding process, wherein a recess (5) is formed in the support core grip section, **characterised in that**, b) the electronic assembly (3) is introduced into the recess (5), whereby the electronic assembly (3) is premounted onto a plastic plate and is introduced into the recess (5) such that the plastic plate covers the recess (5) with the electronic assembly (3), and c) a cover layer (6) of plastic is injection moulded around the support core (4) so that the cover layer (6) constitutes the outer wall of the motor vehicle door handle (1) and the moulded-in support core grip section constitutes the grip section (2) of the motor vehicle door handle (1).

11. A method as claimed in claim 10, **characterised in that** the support core (5) is made in step a) in an injection moulding process, in which an injection moulded component is formed with a foam structure.

12. A method as claimed in claim 11, **characterised in that** the support core (5) is produced in a MuCell process.

13. A method as claimed in one of claims 10 to 12, **characterised in that** the recess (5) is produced during the production of the support core (4) by injection moulding.

14. A method as claimed in one of claims 10 to 13, **characterised in that** a support core is produced with a supply line passage (7) starting from the recess (5) and supply lines (8) of the electronic assembly (3) are passed through the supply line passage (7) in the course of their introduction into the recess.

## Revendications

1. Poignée de porte (1) de véhicule automobile comprenant une zone de préhension (2) et un bloc électronique (3) agencé à l'intérieur de la zone de préhension (2), dans laquelle :
un noyau de support (4) en matière synthétique moulée par injection s'étend à l'intérieur de la poignée de porte (1) du véhicule automobile,
le bloc électronique (3) est aménagé dans un évidement (5) du noyau de support (4), **caractérisée en ce que** le bloc électronique est préalablement monté sur un support de matière synthétique et logé dans l'évidement (5) de sorte que le support de matière synthétique forme un recouvrement de l'évidement (5), et
le noyau de support (4) conjointement avec le bloc électronique (3) est enrobé d'une couche de recouvrement (6) en matière synthétique formant une paroi externe de la poignée de porte (1) du véhicule automobile.

2. Poignée de porte de véhicule automobile selon la revendication 1, **caractérisée en ce que** le noyau de support (4) est une pièce moulée par injection avec une structure alvéolaire.

3. Poignée de porte de véhicule automobile selon la revendication 2, **caractérisée en ce que** le noyau de support (4) est une pièce moulée par injection fabriquée par le procédé MuCell.

4. Poignée de porte de véhicule automobile selon l'une quelconque des revendications 1 à 3, **caractérisée en ce que** la couche de recouvrement (6) n'est, en aucun endroit, plus épaisse que 15 mm, de préférence de moins de 5 mm d'épaisseur.

5. Poignée de porte de véhicule automobile selon l'une quelconque des revendications 1 à 3,
**caractérisée en ce que** les lignes de connexion (8) du bloc électronique (3) provenant de l'évidement (5) du noyau de support (4) sont guidées à travers une zone du noyau de support s'appliquant sur une paroi de porte à l'intérieur du noyau de support (4) et sortent de la poignée de porte du véhicule automobile en un point qui est situé, à l'état monté, derrière la paroi de la porte.

6. Poignée de porte de véhicule automobile selon la revendication 5, **caractérisée en ce que** les lignes de connexion comprennent des câbles (8) qui sont guidés par un canal (7) provenant de l'évidement (5).

7. Poignée de porte de véhicule automobile selon la revendication 6, **caractérisée en ce que** les câbles guidés à travers le canal (7) sont solidement connectés au bloc électronique (3).

8. Poignée de porte de véhicule automobile selon la revendication 5, **caractérisée en ce que** les lignes de connexion comprennent des lignes introduites dans le noyau de support, qui sont connectées avec des contacts à l'intérieur de l'évidement, dans laquelle les contacts à l'intérieur de l'évidement sont en prise avec des contacts correspondants du bloc électronique.

9. Poignée de porte de véhicule automobile selon l'une quelconque des revendications 1 à 8,
**caractérisée en ce que** le bloc électronique (3) comprend plusieurs sous-groupes qui sont introduits chaque fois dans des évidements partiels prévus à cet effet dans le noyau de support (4).

10. Procédé de fabrication d'une poignée de porte (1) de véhicule automobile avec une zone de préhension (2) et un bloc électronique (3) aménagé à l'intérieur de la poignée de porte (1) du véhicule automobile dans la zone de préhension (2), dans lequel :
a) un noyau de support (4) en matière synthétique est fabriqué par un procédé de moulage par injection, lequel noyau de support présente une section de poignée, dans laquelle section de poignée du noyau de support est formé un évidement (5),
**caractérisé en ce que**
b) le bloc électronique (3) est aménagé dans l'évidement (5), lequel bloc électronique est préalablement monté sur une plaque de matière synthétique et logé dans l'évidement (5) de sorte que la plaque de matière synthétique recouvre l'évidement (5) avec le bloc électronique (3), et
c) le noyau de support (4) est enrobé d'une couche de recouvrement (6) en matière synthétique de sorte que la couche de recouvrement (6) forme la paroi externe de la poignée de porte (1) du véhicule automobile et que la section de poignée du noyau de support enrobé forme la zone de préhension (2) de la poignée de porte (1) du véhicule automobile.

11. Procédé selon la revendication 10, **caractérisé en ce que**, à l'étape a), le noyau de support (4) est fabriqué par un procédé de moulage par injection, dans lequel est formée une pièce à structure alvéolaire.

12. Procédé selon la revendication 11, **caractérisé en ce que** le noyau de support (4) est fabriqué par un procédé MuCell.

13. Procédé selon l'une quelconque des revendications 10 à 12, **caractérisé en ce que** l'évidement (5) est ménagé lors de la fabrication du noyau de support (4) par moulage par injection.

14. Procédé selon l'une quelconque des revendications 10 à 13, **caractérisé en ce que** le noyau de support (4) est fabriqué avec un canal d'alimentation (7) provenant de l'évidement (5) et des lignes (8) du bloc électronique (3) sont guidées à travers le canal d'alimentation (7) lors de leur montage dans l'évidement (5).
